# EUROPÄISCHE PATENTSCHRIFT

(11) **EP 1 343 639 B1**
(45) Veröffentlichungstag und Bekanntmachung des Hinweises auf die Patenterteilung: **19.07.2006**
(21) Anmeldenummer: 01272028.0
(22) Anmeldetag: 18.12.2001
(51) Int. Cl.: B42D 15/10

(54) **DEKORFOLIE**
DECORATIVE FOIL
FILM DECOR

(30) Priorität: 22.12.2000 DE 10064616
(43) Veröffentlichungstag der Anmeldung: 17.09.2003
(73) Patentinhaber: OVD Kinegram AG, 6301 Zug (CH)
(72) Erfinder: TOMPKIN, Wayne, Robert, CH-5400 Baden (CH); STAUB, René, CH-6332 Hagedorn (CH)
(74) Vertreter: Zinsinger, Norbert
(86) Internationale Anmeldenummer: PCT/EP2001/014970
(87) Internationale Veröffentlichungsnummer: WO 2002/051646

(56) Entgegenhaltungen:
- EP-A- 0 956 975
- WO-A-99/47983
- US-A- 4 662 653
- US-A- 4 856 857
- US-A- 5 331 443

## Beschreibung

Die Erfindung bezieht sich auf eine Dekorfolie, ein Verfahren zum Beschriften der Dekorfolie und eine Verwendung der Dekorfolie gemäss dem Oberbegriff der Ansprüche 17 und 21.

Solche Dekorfolien werden zum Sichern und zum Schutz von Beschriftungen, Photos und anderen Indicia auf Dokumenten, wie Pässen, Identitätskarten, Kreditkarten, Banknoten usw., oder zum Verpacken von Wertgegenständen verwendet.

In der US 5,331,443 ist ein Verfahren beschrieben, wie eine frisch geprägte und mit einer Reflexionsschicht überzogene lichtbeugende Reliefstruktur durch eine Beschriftung individualisierbar ist. Die Reflexionsschicht wird mittels Laserstrahlen lokal entfernt und anschliessend mit einer Klebeschicht überzogen. Der Nachteil dieses Verfahrens liegt darin, dass vor der Fertigstellung des Schichtverbunds durch Auftragen der Klebeschicht die individuelle Beschriftung eingebracht werden muss.

Es ist auch bekannt (US 2,590,906), dass ein mit einem Metall beschichtetes Dielektrikum ein Interferenzfilter bildet, das im Tageslicht brillante Interferenzfarben reflektiert. In der US 3 858 977 ist die Eignung von mehrschichtigen Interferenzfiltern als Echtheitsmerkmal für Dokumente beschrieben. Gemäss US 3,338,730 sind strukturierte, nicht Tageslicht beugende Oberflächen mit solchen Interferenzfiltem überzogen worden, um ein in den Interferenzfarben aufscheinendes, attraktives Verpackungsmaterial zu erhalten.

Die WO 98/19869 beschreibt ein Verfahren zum Perforieren von Dokumenten mittels gebündeltem Laserlicht. Die Dichte der im Dokument hergestellten Löcher und deren Durchmesser werden durch ein Muster einer Vorlage bestimmt. Dazu tastet ein optischer Sensor die Vorlage ab und setzt die erkannten Grautöne der Vorlage in Dichte und Durchmesser der eingebrannten Löcher um. Damit lassen sich Bilder. Porträts oder Buchstabenbilder erzeugen, die in Durchsicht erkennbar und praktisch nicht verfälschbar sind. Anwendungen dieses Verfahrens sind im Aufsatz "Application of laser technology to introduce security features on security documents in order to reduce counterfeiting" von W. Hospel in Proceedings of SPIE, Vol. 3314, 28 - 30 January, 1998, Seiten 254 - 259 beschrieben.

Im Aufsatz "Search for effective document security by 'inventioneering' " von J. D. Brongers in Proceedings of SPIE Vol. 3314, January, 1998, Seiten 29 - 38 werden mit dem intensiven, fein fokussierten Laserlicht Farbschichten auf der Oberfläche eines Substrats in vorgegebenem Muster aus einem Druckbild entfernt, ohne das Substrat selbst zu beschädigen.

Die US 4'662'653 beschreibt eine optische Gitterstruktur aus spiegelnden ebenen Metallamellen. Die Metallamellen sind in einer Ebene periodisch angeordnet, die im vorbestimmten Abstand d parallel zu einer vollflächigen spiegelnden, ebenen metallischen Fläche ist. Die Metallamellen weisen eine Periode von 10 Mikrometer oder weniger auf. Die Metallamellen und die metallische Fläche sind mit Vorteil in ein transparentes Dielektrikum eingebettet und durch eine Schutzschicht aus dem gleichen dielektrischen Material geschützt. Durch die Schutzschicht einfallendes Licht wird durch die optische Gitterstruktur in die aktiven Beugungsordnungen gebeugt.

Die EP 0 201 323 B1 beschreibt den Schichtaufbau von Kunststoffolien, die eingeprägte Hologramme mit transparenten Reflexionsschichten einschliessen. Die für den Schichtaufbau und die Reflexionsschicht geeignete Materialien sind in diesem Dokument zusammengestellt.

Transparente Dielektrika mit einem sehr hohen Brechungsindex zur Erhöhung des Reflexionsvermögens bei Beugungsstrukturen sind aus der WO 99/47983 bekannt.

Der Erfindung liegt die Aufgabe zugrunde, eine kostengünstige Dekorfolie zu schaffen, die sich zum Beschriften und zum Auflaminieren auf ein Dokument bzw. zum Verpacken eignet, ein Verfahren anzugeben, wie in die Dekorfolie Informationen eingebracht werden und eine Verwendung für die Dekorfolie anzugeben.

Die genannte Aufgabe wird erfindungsgemäss durch die im Kennzeichen der Ansprüche 17 und 21 angegebenen Merkmale gelöst. Vorteilhafte Ausgestaltungen der Erfindung ergeben sich aus den abhängigen Ansprüchen.

Ausführungsbeispiele der Erfindung sind in der Zeichnung dargestellt und werden im folgenden näher beschrieben.

Es zeigen:
- Figur 1: eine Dekorfolie auf einem Substrat im Querschnitt,
- Figur 2: eine andere Ausführung der Dekorfolie im Querschnitt,
- Figur 3a: ein Motiv in der Dekorfolie im Querschnitt,
- Figur 3b: das Motiv in Draufsicht auf die Dekorfolie,
- Figur 4: Ausführungen der Dekorfolie in Draufsicht,
- Figur 5: ein Dekorfolienband in Draufsicht
und
- Figur 6: ein mit der Dekorfolie laminiertes Dokument.

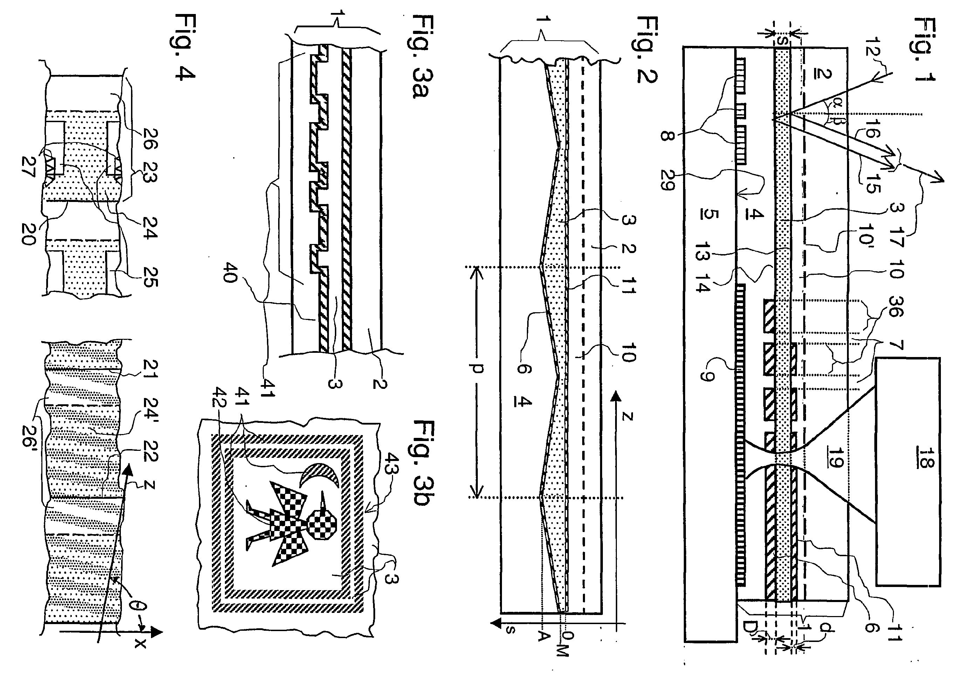

In der Figur 1 bedeutet 1 einen Schichtverbund für eine Dekorfolie, 2 eine Basisfolie, 3 eine dielektrische Schicht, 4 eine Deckschicht, 5 ein Substrat, 6 eine metallische Schicht, 7 eine transparente Stelle ohne metallische Schicht 6 sowie 8 Indicia und 9 ein Farbfeld auf dem Substrat 5. Das Substrat 5 ist wenigstens Teil eines Dokuments, wie Banknote, Personalausweis, Pass, Identitätskarte, Kreditkarte usw.

Der Schichtverbund 1 ist auf einer transparenten Basisfolie 2 aufgebaut. Bei einer einfachen Ausführung des Schichtverbunds 1 ist die innenliegende Seite der Basisfolie 2 vollflächig mit einer dünnen Schicht 3 eines transparenten Dielektrikums überzogen. Anschliessend folgt auf der dielektrischen Schicht 3 wenigstens in Teilbereichen eine reflektierende metallische Schicht 6. Die metallische Schicht 6 kann direkt nur in den Teilbereichen aufgetragen sein oder zunächst vollflächig,
wobei anschliessend ausserhalb der Teilbereiche die metallische Schicht 6 wieder entfernt wird. Der Schichtverbund 1 wird als Dekorfolie fertiggestellt durch Abdecken der dielektrischen Schicht 3 bzw. metallischen Schicht 6 mit der Deckschicht 4.

Ist die Dekorfolie zum Auflaminieren auf ein Substrat 5 vorgesehen, weist das Material der Deckschicht 4 eine Klebefähigkeit auf. Der Schichtverbund 1 wird mit der Deckschicht 4 mit dem Substrat 5 in Kontakt gebracht und durch Aktivieren des Klebers der Deckschicht 4 mit dem Substrat 5 verbunden. Beispielsweise besteht die Deckschicht 4 aus einem Heisskleber, dessen Klebefähigkeit sich erst durch Erwärmen des Schichtverbunds 1 und des Substrats 5 auf eine Temperatur von über 100°C entwickelt. Solche Heisskleber sind auf Polyurethan- oder Polyäthylenbasis verfügbar. In einer anderen Ausführung des Schichtverbunds 1 ist das Material der Deckschicht 4 ein Kaltkleber, der durch Andrücken des Schichtverbunds 1 auf das Substrat 5 aktiviert wird. Der Einsatz eines Kaltkleber bedingt, dass die freie Oberfläche der Deckschicht 4 sofort nach dem Aufbringen des Kaltklebers mit einer hier nicht gezeigten Abziehfolie abzudecken ist. Die Abziehfolie muss vor dem Aufkleben des Schichtverbunds 1 auf das Substrat 5 entfernt werden. Für die Deckschicht 4 verwendbare Materialien sind in der EP 0 201 323 B1, im Abschnitt "adhesive layer" auf der Seite 13 erwähnt.

Die Basisfolie 2 kann auf der dem Dielektrikum zugewandten Seite eine transparente Lackschicht 10 aufweisen, um bessere Haftung des Dielektrikums und/oder um eine leichtere mechanische Verformbarkeit der dem Dielektrikum zugewandten Oberfläche der Basisfolie 2 zu erhalten, wenn sich die Lackschicht 10 zum Abformen eines mikroskopisch feinen Reliefs eines Flächenmusters besser als die Basisfolie 2 eignet. Das Flächenmuster umfasst mosaikartig angeordnete Beugungselemente und andere Flächenelemente mit streuenden oder spiegelnden Eigenschaften oder ist ein Hologramm. Die Lackschicht 10 ist wenigstens etwa doppelt so dick wie die Profilhöhe der mikroskopisch feinen Reliefs des Flächenmusters aufgetragen; die Dicke der Lackschicht 10 liegt im Bereich von 150 nm bis 2 µm. Das Abformen des Reliefs kann vor oder nach dem Aufbringen der dielektrischen Schicht 3 oder auch erst in die metallische Schicht 6 erfolgen.

Heisslaminierbare Dekorfolien weisen in einer Ausführung zwischen einer Lackschicht 10 und der Basisfolie 2 mit Vorteil eine in der Figur 1 durch eine gestrichelte Linie angedeutete, etwa 500 nm bis 1 µm starke Trennschicht 10' auf, um nach dem Auflaminieren der Dekorfolie auf das Substrat 5 die Basisfolie 2 abziehen zu können. Der auf dem Substrat 5 verbleibende Teil des Schichtverbundes 1 ist weniger als 20 µm stark.

In einer anderen Ausführung enthält der Schichtverbund 1 zusätzlich einen transparenten Metallfilm 11 zwischen der Basisfolie 2 bzw. der Lackschicht 10 und der dielektrischen Schicht 3. Der Metallfilm 11 überdeckt die erste Grenzschicht 13 derart, dass die dielektrische Schicht 3 zwischen dem Metallfilm 11 und der metallischen Schicht 6 eingebettet ist.

Transparentes Material ist optisch klar und lässt das ganze Spektrum des sichtbaren Lichts (= glasklares Material) oder nur gewisse Spektralbereiche desselben (= farbiges Material) durch.

Als Basisfolie 2 eignen sich Folienbahnen aus Polyvinylchlorid (PVC), Polycarbonat (PC), Polyethylentheraphtalat (PETP), Polyäthylen (PE), Polypropylen (PP), Cellophan oder eine Folie aus einem anderen transparenten Kunststoff, die in Breiten von etwa 30 cm bis 120 cm im Handel erhältlich sind. Gemeinsam sind den Folien ihre hohe Transparenz und grosse Zugfestigkeit auch in geringen Schichtdicken. Typisch liegen die Schichtdicken dieser Folien, in Abhängigkeit vom Folienmaterial, im Bereich zwischen 200 µm und weniger als 9 µm. Der Brechungsindex n_{D} dieser Materialien liegen im Wertebereich von 1,50 bis 1,60 bzw. diesem Bereich um wenige Zehntel unmittelbar benachbart. Eine gute Haftung zwischen der Basisfolie 2 und den übrigen Schichten des Schichtverbunds 1 ist unabdingbar.

Die Lackschicht 10 wird auf der Basisfolie 2 in Form eines dünnflüssigen Lacks aufgetragen. Beispiele verschiedener transparenter Lacke sind in der eingangs erwähnten EP 0 201 323 B1, Seite 5, Abschnitt "Transparent hologram forming layer" aufgeführt, sowohl lösungsmittelhaltige als auch lösungsmittelfreie, z.B. mittels ultraviolettem Licht härtende, Lacke. Ein Rezept für einen Lack mit Lösungsmittel für die thermoplastische Lackschicht 10 ist auf der Seite 19, Zeile 15 der EP 0 201 323 B1 angegeben.

Die dielektrische Schicht 3 weist in einer Ausführung einen im wesentlichen gleichmässigen Auftrag in der Stärke s auf, wobei die Stärke s höchstens 300 nm beträgt, typische Werte sind jedoch 50 nm bis 200 nm. Geeignete, im sichtbaren Teil des Spektrums elektromagnetischer Wellen transparente Dielektrika sind in der eingangs erwähnten EP 0 201 323 B1, Tabelle 1 erwähnt. Das ausgewählte Dielektrikum wird im Vakuum mittels Aufdampfen oder Sputtern auf die Basisfolie 2 bzw. auf die Lackschicht 10 aufgetragen. Bevorzugte transparente Dielektrika sind MgF₂, ZnO, SiO, SiO₂, TiO₂ und ZnS sowie die sich durch einen sehr hohen Brechungsindex auszeichnenden, aus der WO 99/47983 bekannten chalkogeniden Substanzen, wie Ge₃₀Sb₁₀S₆₀ (n= 2.25), As₅₀Ge₂₀Se₃₀ (n= 2.95), Ge₂₀Sb₂₅Se₅₅ (n= 3.11).Durch die Basisfolie 2 in den Schichtverbund 1 unter einem Einfallswinkel α eindringendes weisses Licht 12 wird an einer ersten Grenzfläche 13 zwischen der Basisfolie 2 bzw. Lackschicht 10 und dem Metallfilm 11 bzw. der dielektrischen Schicht 3 sowie an einer zweiten Grenzfläche 14 zwischen der dielektrischen Schicht 3 und der metallischen Schicht 6 bzw. der Deckschicht 4 teilweise reflektiert, wobei der Grad der Reflexion vom Sprung im Brechungsindex beim Übergang an jeder Grenzfläche 13, 14 und dem Einfallswinkel α bestimmt ist. Lichtstrahlen 15, die in die dielektrische Schicht 3 eingedrungen sind und an der zweiten Grenzfläche 14 reflektiert wurden, legen eine grössere Wegstrecke zurück wie Lichtwellen 16, die schon an der ersten Grenzfläche 13 gespiegelt wurden. Die Lichtstrahlen 15 und die Lichtwellen 16 weisen aufgrund des Weglängenunterschieds einen Phasenunterschied auf, wobei infolge von Interferenzeffekten ein reflektiertes Licht 17 aus den Lichtstrahlen 15 und den Lichtwellen 16 entsteht, bei dem bestimmte Wellenlängenbereiche aus dem Spektrum des weissen Lichts 12 ausgelöscht sind. Die Dekorfolie glänzt daher im Tageslicht in einer von der Dicke der dielektrischen Schicht 3 und dem Reflexionswinkel β, d.h. α = β, abhängigen Interferenzfarbe. Die Intensität der Interferenzfarbe des reflektierten Lichts 17 ist verstärkt, wenn die metallische Schicht 6 und/oder der Metallfilm 11 vorhanden ist.

Anstelle dieser transparenten Dielektrika besteht in einer weiteren Ausführung die dielektrische Schicht 3 aus einem der für die Lackschicht 10 genannten Lacke. Da sich die Brechungsindices der Materialien für die Basisfolie 2 bzw. die Lackschicht 10 und für die Deckschicht 4 nur sehr wenig von der dielektrischen Schicht 3 unterscheiden, ist die Intensität der Interferenzfarben gering. Die dielektrische Schicht 3 ist daher vorzugsweise zwischen dem Metallfilm 11 und der metallischen Schicht 6 angeordnet.

In einer anderen Ausführung des Schichtverbunds 1 ist für die Deckschicht 4 anstelle des Klebers dasselbe Material wie für die Lackschicht 10 aufgetragen. Eine solche Folie ist als Verpackungsfolie für exklusive Gegenstände und Geschenkartikel verwendbar. Auch die mit einem Heisskleber ausgerüsteten Dekorfolien sind zum Verpacken verwendbar. Deshalb bezeichnet "Dekorfolie" sowohl eine dekorative Laminierfolie als auch eine dekorative Verpackungsfolie.

Das gegebenenfalls in die Lackschicht 10 eingeformte, mikroskopisch feine Relief des beugungsoptischen Flächenmusters beugt an der ersten und zweiten Grenzfläche 13, 14 das einfallende Licht 12 mit der Wellenlänge λ unter den durch die Wellenlänge λ und den jeweiligen Gitterparameter, wie Gittervektor, Reliefprofil, Spatialfrequenz f, Azimut usw., bestimmten Beugungswinkeln γ. Das an der ersten Grenzfläche 13 gebeugte Licht weist gegenüber dem an der zweiten Grenzfläche 14 gebeugten Licht einen Weglängenunterschied auf. Wegen der Interferenzeffekte kann das unter dem Beugungswinkel γ in der m-ten Ordnung gebeugte Licht mit der Wellenlänge λ ausgelöscht werden, so dass Teile des Flächenmusters statt in brillanten Farben in einer Mischfarbe oder gar grau bis schwarz erscheinen. Falls der Gittervektor in der Ebene des unter dem Winkel α einfallenden Lichts 12 liegt, ist der Beugungswinkel γ durch die Beziehung γ = ± arcsin[m·f·λ + sin(α)] bestimmt. Zur Vereinfachung der Darstellung in der Figur 1 sind Richtungsänderungen der Lichtstrahlen 12, 15, 16 infolge von Brechungseffekten nicht gezeigt.

Die metallische Schicht 6 und der Metallfilm 11 bestehen aus einem Metall der bevorzugten Gruppe: Aluminium, Silber, Gold, Chrom, Kupfer und Tellur. Diese Metalle eignen sich zum Aufdampfen der metallischen Schicht 6 bzw. des Metallfilms 11 und sind im Schichtverbund 1 chemisch unempfindlich. Die metallische Schicht 6 soll einen Grossteil der einfallenden Lichtstrahlen 12 reflektieren. Die Dicke D der metallischen Schicht 6 beträgt daher mehr als 50 nm, vorzugsweise 50 nm bis 300 nm. Im Gegensatz dazu muss der Metallfilm 11 für einen Grossteil des einfallenden Lichts 12 transparent sein; der Metallfilm 11 weist daher eine Schichtdicke d im Wert von 50 nm oder weniger auf; ein typischer Bereich der Schichtdicke d ist 5 nm bis 15 nm. Die Schichtdicken D und d sind vom Metall und der Wellenlänge λ des einfallenden Lichts 12 bzw. 15 abhängig, wie dies in "Optical properties of thin solid films" von O. S. Heavens, Butterworths Scientific Publications, London (1955), Seiten 156 - 170 dargelegt ist. In einer Sonderausführung ist auch die Dicke D (Fig. 1) der metallischen Schicht 6 so gering, dass die metallische Schicht 6 so transparent wie der Metallfilm 11 ist. Die Reflektivität im Schichtverbund 1 ist höher als beim Schichtverbund 1 ohne Metallschichten 6, 11, jedoch geringer als bei der Dekorfolie mit einer vollständig reflektierenden metallischen Schicht 6. Der Schichtverbund 1 ist daher auf seiner ganzen Fläche farbig transparent und reflektiert farbiges Licht 17.

Eine Schreibeinrichtung 18 umfasst eine gepulste Lichtquelle, z.B. Laser, Leuchtdiode usw., mit einer Fokussiereinrichtung kurzer Brennweite. Ein von der Lichtquelle kurzzeitig emittierter Energiestrahl 19 hoher Leistung wird mittels der Fokussiereinrichtung derart durch die Basisfolie 2 hindurch in den Schichtverbund 1 hinein gebündelt, dass sich der Fokus des Energiestrahls 19 und damit die höchste Leistungsdichte im Bereich der metallischen Schicht 6 befindet. Auf einer Achse des Energiestrahls 19 nimmt die Leistungsdichte ausserhalb des Fokus rasch ab. Die dünne metallischen Schicht 6 und ein allfällig vorhandener Metallfilm 11 werden lokal schnell über den Schmelzpunkt des Metalls hinaus erwärmt. Beim Abkühlen erstarrt das Metall an den Grenzflächen 13, 14 zu sehr feinen, vom Auge nicht sichtbaren Kügelchen. Der Energiestrahl 19 perforiert nur die Metallschichten 6, 11, nicht aber die anderen Schichten des Schichtverbunds 1, so dass der Schichtverbund 1 an der Perforation die transparente Stelle 7 aufweist. Im Fokus beträgt der Durchmesser des Energiestrahls 19 typisch einige 10 µm. Die Impulsdauer und die abgegebene Leistung des Energiestrahls 19 bestimmen den Durchmesser der mit einem Impuls erzeugten transparenten Stelle 7. Eine Vielzahl von Impulsen des Energiestrahls 19, appliziert an unmittelbar nebeneinander liegenden Orten, erzeugen die kreisrunde transparente Stelle 7 mit einer Abmessung bis 1 mm oder eine bis zu 1 mm breite, linienförmige transparente Stelle 7. Die Impulsdauer, die Leistung und die Wellenlänge des Energiestrahls 19 sind so zu wählen, dass der Energiestrahl 19 einerseits möglichst wenig Energie in der dielektrischen Schicht 3, in den Kunststoffschichten 2, 4, 10 und in den Indicia 8 bzw. dem Farbfeld 9 deponiert, so dass sich deren Erwärmung in Grenzen hält und keine Beschädigung des Schichtverbunds 1 bzw. des Substrats 5 auftritt, und anderseits vom Metall der Schichten 6, 11 stark absorbiert wird. Die Folienbahnen mit dem Schichtaufbau 1 sind mit dieser Einrichtung in den Teilflächen mit der metallischen Schicht 6 beschriftbar. Dazu werden die Folienbahnen auf einer Umrollanlage von einem Wickel abgerollt und auf dem andern wieder aufgerollt. Während des Umrollens wird die Foliebahn unter dem computergesteuerten, quer über die Folienbahn verschiebbaren Energiestrahl 19 hindurchgezogen und die transparenten Stellen 7 in einem vorbestimmten Muster im Schichtverbund 1 erzeugt.

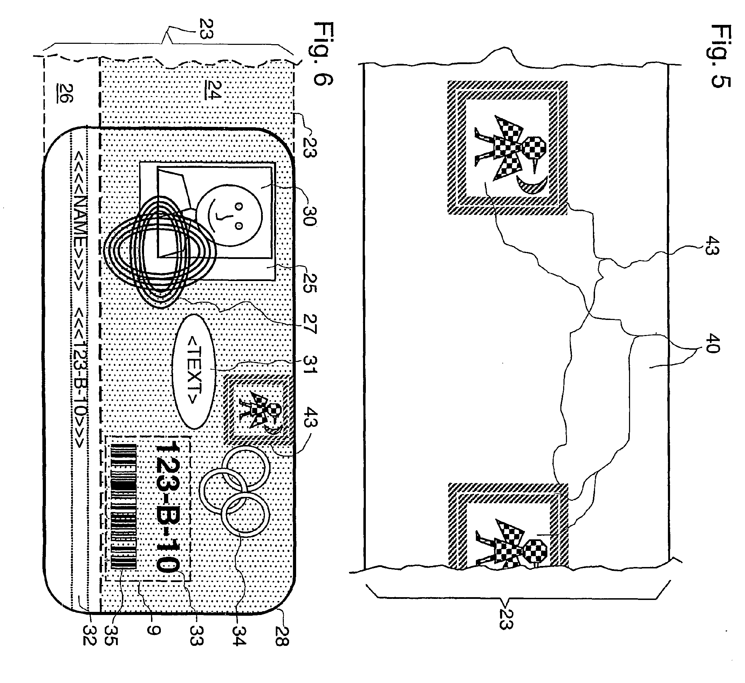

In der Ausführung der Dekorfolie gemäss Figur 2 weist der Schichtverbund 1 die dielektrische Schicht 3 auf, deren Stärke s in der Richtung z in einem Winkel θ (Fig. 4) zur Laufrichtung x (Fig. 4) der Dekorfolie mit einer Funktion F(z) moduliert ist. Der Winkel θ weist einen Wert im Bereich von 30° bis 90° auf. Die Funktion F(z) ist beispielsweise, wie in der Figur 2 gezeigt, periodisch, wobei eine in der Richtung z gemessene Periode p in der Grössenordnung von einigen Zentimetern bis Dezimetern liegt; vorzugsweise ist die Länge der Periode p aus dem Bereich 1 cm ≤ p ≤ 50 cm gewählt. Diese Modulation wird durch ein ungleichmässiges Aufdampfen des Materials für die dielektrischen Schicht 3 erhalten. Die Funktion F(z) ändert die Werte der Stärke s zwischen einem Minimalwert M und dem Maximalwert A. Zum Beispiel liegt der Minimalwert M im Bereich ≤ 50 nm, während sich der Bereich für den Maximalwert A von 100 nm bis 300 nm erstreckt. Die Stärke s variiert daher sehr langsam über die Fläche der Dekorfolie. Für die in der Darstellung der Figur 2 gezeigte Sägezahn - Funktion F(z) liegt der Gradient der Stärke s im Bereich von 2 nm/cm bis 250 nm/cm, wenn die vorgenannten Werte für den Minimalwert M, den Maximalwert A und für die Periode p angenommen werden. Für andere Funktionen F(z) ändert sich die Stärke s zwischen dem Minimalwert M und dem Maximalwert A mit einem maximalen Gradienten der Stärke s, der sich im gleichen Bereich wie bei der periodischen Sägezahn - Modulation bewegt.

Da, wie oben ausgeführt, die Farbe des von der Dekorfolie reflektierten Lichts 17 (Fig. 1) von der Stärke s der dielektrischen Schicht 3 abhängt, ändert sich die Farbe des reflektierten Lichts 17 über die Fläche des Schichtverbunds 1 entsprechend der durch die Funktion F(z) bewirkten Modulation der Stärke s. Mit und ohne beugungsoptische Flächenmuster in der Basisfolie 2 bzw. Lackschicht 10 weist ein solcher Schichtverbund 1 ein auffallendes Aussehen auf. Ein besonders auffälliges Muster wird erhalten, falls nach dem Auftragen einer ersten, in der Richtung (z) modulierten dielektrischen Schicht 3 in einer zweiten Anlage auf diese erste Schicht 3 ein zweites Dielektrikum aus demselben oder einem anderen Material abgeschieden wird, wobei die Auftragsstärke des zweiten Dielektrikums z.B. quer zur Richtung z moduliert ist. In diesem Beispiel erscheint im reflektierten Licht 17 auf der Oberfläche der Dekorfolie ein netzförmiges, farbiges Muster.

In einer in der Figur 3a gezeigten Ausführung der dielektrischen Schicht 3 ist die Modulation binär, d.h. die dielektrische Schicht 3 weist nur zwei Werte der Stärke s (Fig. 2) auf. Die dünnere Schicht in Hintergrundflächen 40 weist einen Wert der Stärke sₘᵢₙ von weniger als 200 nm und die dickere Schicht in Motivflächen 41 einen Wert der Stärke sₘₐₓ im Bereich von 100 nm bis 300 nm auf, wobei die Stärke sₘₐₓ wenigstens um 25 nm dicker als die Stärke sₘᵢₙ ist. In einem Spezialfall ist die Stärke sₘᵢₙ = 0; d.h. die dielektrische Schicht 3 besteht aus den nicht zusammenhängenden Motivflächen 41, die durch die Hintergrundflächen 40 mit oder ohne metallische Schicht 6 getrennt sind. In einem Beispiel ist auf die gleichmässig aufgetragene dielektrische Schicht 3 ein aus Motivflächen 41 bestehendes Motiv aus dem gleichen oder einem anderen Dielektrikum so aufgetragen, dass die dielektrischen Schicht 3 die Stärke sₘₐₓ in den Motivflächen 41 des Motivs und die Stärke sₘᵢₙ ausserhalb der Motivflächen 41 aufweist. Die Stärke s der dielektrische Schicht 3 ändert sich gemäss dem Motiv und ist daher mit dem Motiv moduliert. Beim Betrachten des Schichtverbunds 1 ist das Motiv durch die Basisfolie 2 hindurch sichtbar. Die Motivflächen 41 unterscheiden sich von den Hintergrundsflächen 40 durch eine andere Interferenzfarbe des reflektierten Lichts 17 (Fig. 1). Die Erzeugung der Motivflächen 41 erfolgt mit Vorteil durch Auftragen einer zusätzlichen Schicht des Dielektrikums, z.B. durch eine hier nicht gezeigte Maske hindurch, oder mittels eines an sich bekannten Druckverfahrens, wobei in den Motivflächen 41 vorzugsweise der oben erwähnte transparente Lack bis auf die erforderliche Stärke sₘₐₓ aufgetragen wird.

Überlappen sich die Motivflächen 41, die nacheinander in verschiedenen Schichten mit demselben Dielektrikum oder mit verschiedenen Dielektrika aufgetragen sind, ergibt die Anordnung der Motivflächen 41 eine Stufenmodulation der aus dem Dielektrikum oder den Dielektrika bestehenden Schicht 3.

Die Figur 3b zeigt in der Draufsicht die Struktur der dielektrischen Schicht 3, wobei die erhabenen Motivflächen 41 zeichnerisch gerastert dargestellten sind. Die Abmessungen der mittels eines Linienrasters zeichnerisch dargestellten Motivflächen 41 sind meist grösser als 0,3 mm, ausser bei gerasterten Bildern 42, deren Motivflächen 41 einen Punktraster mit einer Auflösung von bis zu 400 dpi (= 16 Pixel/mm) aufweisen. Werden Grauwerte der Bilder 42 durch die Dichte des Punktrasters dargestellt, sind schwarz-weiss Portraits als Vorlage für die Bilder 42 verwendbar. Die Motivflächen 41 und/oder die Bilder 42 bilden ein Muster 43. Zu erwähnen ist in diesem Zusammenhang die Tintenstrahldrucktechnik, mit der die Motivflächen 41 der gerasterten Bilder 42, Schriften und Linien nach einer in einem Computer in elektronischer Form gespeicherten Vorlage auf die dielektrische Schicht 3 übertragen werden.

Es wird nun wieder auf Figur 1 Bezug genommen. Da die Schicht 6 infolge ihrer Schichtdicke D praktisch nicht mehr transparent ist, verdeckt der Schichtverbund 1 in den Teilflächen mit den metallischen Schichten 6 die unter dem Schichtverbund 1 liegenden Indicia 8 oder Farbfelder 9. Im Gegensatz dazu ist der Schichtverbund 1 in den übrigen Teilflächen, wo die transparente dielektrische Schicht 3 direkt an die Deckschicht 4 angrenzt, transparent. Die unter der transparenten Dekorfolie liegenden Indicia 8 oder Farbfelder 9 bzw. Oberfläche 29 des Substrats 5 sind gut sichtbar, sofern die Sichtbarkeit durch das farbige, reflektierte Licht 17 nicht gestört wird.

Die Figur 4 zeigt einen Ausschnitt aus einer Folienbahn mit dem Schichtverbund 1 (Fig. 1), die sich in der Richtung x erstreckt. Die breite Dekorfolie wird nach dem Aufbringen der Deckschicht 4 (Fig. 2) bzw. der allfälligen Abziehfolie entlang den Linien 20, 21, 22 in Bänder 23 von vorbestimmter Breite geteilt und in den Verkehr gebracht.

In der Darstellung der Figur 4 ist auf der linken Seite eine Ausführung der Dekorfolie gezeigt, bei der die dielektrische Schicht 3 (Fig. 1) eine möglichst gleichmässige Stärke s (Fig. 1) aufweist. In einer Ausführung des Bandes 23 weist die dielektrische Schicht 3 in einem Streifen 24 wenigstens an der zweiten Grenzfläche 14 (Fig. 1) die metallische Schicht 6 (Fig. 2) auf, während streifenförmige Areale 26, 26' des Schichtverbunds 1 transparent sind. In der Zeichnung der Figur 4 sind im Band 23 der mit einem groben Punktraster hervorgehobene Streifen 24, 24' und das Areal 26, 26' mit einer gestrichelten Linie zeichnerisch getrennt. In einer Ausführung weist der Streifen 24 in regelmässigen Abständen Fensterflächen 25 in der metallische Schicht 6 auf, in denen der Schichtverbund 1 transparent ist. In einer vorteilhaften Ausführung ist im Bereich der Fensterflächen 25 das mikroskopisch feine Relief des oben erwähnten Flächenmusters 27 eingeprägt, um die Fälschungssicherheit zu erhöhen. Das Flächenmuster 27 kann auch in an die Fensterflächen 25 angrenzende Zonen des Streifens 24 übergreifen.

In einer anderen Ausführung der Dekorfolie, die in der Darstellung der Figur 4 auf der rechten Seite gezeigt ist, weist die dielektrischen Schicht 3 in der ausgezeichneten Richtung z die periodische Modulation der Stärke s auf. Das im reflektierten Licht verschieden farbig aufscheinende Streifenmuster ist in der Darstellung der Figur 4 mittels streifenförmigen Flächen, die alternierend einen dichten Raster und einen groben Raster bzw. keinen Raster aufweisen, mit zeichnerischen Mitteln hervorgehoben. In den Arealen 26' zwischen der Linie 21 bzw. 22 und der nächst gelegenen gestrichelten Linie weist die dielektrische Schicht 3 keinen Metallbelag auf und das Areal 26' ist transparent. Der grobe Raster im Streifen 24' zwischen der Linie 22 und der links davon gelegenen gestrichelten Linie symbolisiert das Vorhandensein der metallischen Schicht 6, so dass im Streifen 24' der Schichtverbund 1 undurchsichtig ist.

In einer weiteren Ausführung des Schichtverbunds 1 ist die dielektrische Schicht 3 vollflächig wenigstens mit der metallischen Schicht 6 abgedeckt, so dass die ganze Dekorfolie intensiv farbig jedoch nicht transparent ist. Je nach Verwendungszweck wird die Dekorfolie in der Breite unzertrennt oder in Bänder 23 unterschiedlichster Breite zerteilt in den Verkehr gebracht.

Die Figur 5 zeigt einen Ausschnitt des Bands 23 mit Blick auf die Basisfolie 2 (Fig. 3a). Im reflektierten Licht 17 (Fig. 1) hebt sich das Muster 43 wegen der Modulation der Stärke s (Fig. 2) der dielektrischen Schicht 3 (Fig. 3a) in einer anderen Interferenzfarbe von der Interferenzfarbe der Hintergrundflächen 40 in und um das Muster 43 ab. Das in der Figur 3b gezeigte Motiv 43 wiederholt sich beispielsweise in einem regelmässigen Abstand.

In der Figur 6 ist eine Verwendung des gestrichelt gezeichneten Bandes 23 mit den Fensterflächen 25 zum Versiegeln eines Ausweises 28 gezeigt. Der Ausweis 28 besteht aus dem Substrat 5 (Fig. 1), das auf seiner mit der Laminierfolie zu schützenden Oberfläche 29 (Fig. 1) das Farbfeld 9 und die Indicia 8 (Fig. 1) und ein Feld für eine Photographie 30 des Ausweisinhabers aufweist. Die Indicia 8 sind allgemeine Angaben über den Herausgeber des Ausweises in einem Textfeld 31. Bei der Abgabe des Ausweises wird die Photographie 30 in das dafür vorgesehene Feld eingeklebt oder direkt auf das Substrat 5 eingebracht und in einem Beschriftungsstreifen 32 beispielsweise der Name des Inhabers und seine Identifikationsnummer, hier "123-B-10", eingeschrieben. Um ein nachträgliches Verändern des Ausweises 28 zu verhindern, wird ein Stück der Laminierfolie von dem Band 23 so auf den Ausweis geklebt, dass die Photographie 30 durch die Fensterfläche 25 hindurch und der Beschriftungsstreifen 32 durch das Areal 26 hindurch sichtbar sind. Das Textfeld 31 und das Farbfeld 9 sind durch die undurchsichtigen Teilflächen des Streifens 24 der Laminierfolie verdeckt. Nach dem Aufkleben wird der Ausweis 28 so beschnitten, dass keine überstehenden Reste der Laminierfolie verbleiben.

Stücke der Laminierfolie finden auch Verwendung zum Sichern der Individualien eines Passes, von Visa in einem Pass, der Banknoten, der Verpackungen usw. Im folgenden sind diese Anwendungen anhand des Beispiels "Ausweis" beschrieben.

Die Schreibeinrichtung 18 (Fig. 1) wird mittels einer Koordinatensteuerung über die zu beschreibende Fläche des Schichtverbunds 1 verschoben, um in einer vorbestimmten Rasterung die transparenten Stellen 7 (Fig. 1) so zu erzeugen, dass die unter der Laminierfolie liegenden Indicia 8, z.B. im Textfeld 31, und, wenn in der Laminierfolie keine spezielle Fensterfläche 25 vorgesehen ist, die Photographie 30 durch die transparenten Stellen des Schichtverbunds 1 hindurch sichtbar sind.

Mit Vorteil werden mit dem Energiestrahl 19 (Fig. 1) der Schreibeinrichtung 18 auch weitere individuelle Informationen im Gebiet des reflektierenden Streifens 24 auf dem Ausweis 28 durch Zerstören der metallischen Schicht 6 (Fig. 1) eingeschrieben, wie z.B. alphanumerische Zeichen 33, Embleme 34, ein Strichkode 35 oder gerasterte Bilder. Durch die transparenten Stellen 7 (Fig. 1) hindurch ist die Farbe der darunterliegenden Oberfläche 29 zu erkennen. Die transparenten Stellen 7 bilden ein Punkt- und/oder Linienmuster, das sich in der unveränderlichen Farbe der Oberfläche 29 auffällig von reflektierenden Flächenteilen 36 (Fig. 1) des Schichtverbunds 1 abhebt. Anstelle des Punkt- und/oder Linienmusters weisen die transparenten Stellen 7 auch Formen der alphanumerischen Zeichen 33, der Embleme 34, des Strichkodes 35 auf und sind in der Farbe der Oberfläche 29 sichtbar. Im gezeigten Beispiel ist der Text 33, die Identifikationsnummer "123-B-10" aus dem Beschriftungsstreifen 32, über dem Farbfeld 9 erzeugt. In einem anderen Beispiel bilden die rechteckigen transparenten Stellen 7 und die die transparenten Stellen 7 trennenden, reflektierenden Flächenteile 36 unterschiedlicher Breite den Strichkode 35, wobei die rechteckigen transparenten Stellen 7 Striche und die reflektierenden Flächenteile 36 trennende Abstände des Strichkodes 35 darstellen. Bei der Banknote ist die Serienummer das individuelle Element, das nach dem Aufkleben der Laminierfolie kodiert visuell und/oder maschinell lesbar einzuschreiben ist.

Die Schreibeinrichtung 18 ist in einer anderen Ausführung mit der aus der eingangs erwähnten WO 98/19869 bekannten Vorrichtung ausgerüstet und ist in der Lage, eine Bildvorlage abzulesen, sie in kleine, im Raster angeordnete Bildelemente (= Pixel) zu zerlegen und im Schichtverbund 1 in der metallischen Schicht 6 im gleichen Raster transparente Stellen 7 in Form einer Kreisfläche so zu erzeugen, dass die Bildvorlage in dem Schichtverbund 1 abgebildet ist. Grauwerte der Pixel werden durch verschieden grosse Durchmesser der transparenten Kreisflächen wiedergegeben. Auflösungen bis zu 400 dpi (= 16 Pixel pro mm) oder mehr sind erreichbar.

Beispielsweise enthält die Laminierfolie zusätzlich das beugungsoptische Flächenmuster 27 in Form einer Guilloche im Bereich der Fensterfläche 25. Da die Fensterfläche 25 mit der Guilloche nie genau auf dem Feld für die Photographie plaziert ist, ist ein Vertauschen der Photographie 30 (im Rahmen eines Fälschungsversuches) an einem Bruch in der Linienführung der Guilloche erkennbar. Zusätzlich weist in einer Ausführung die Laminierfolie das mittels der Modulation der Stärke s (Fig. 2) der dielektrischen Schicht 3 erzeugte Muster 43 und/oder die periodische Modulation mit einem Streifen- oder Netzmuster auf.

Auf der oben erwähnten Umrollanlage sind die Dekorfolien, ob später als Laminierfolien oder Verpackungsfolien verwendet, mit den erläuterten Mustern beschreibbar. Eine Anwendung ist das Beschriften einer Verpackungsfolie mit dem Logo oder mit dem Warenzeichen des zu verpackenden Produkts.

Ohne von der erfinderischen Idee abzuweichen, ist in der obigen Beschreibung anstelle der dielektrischen Schicht 3 (Fig. 1) aus einem einzigen Dielektrikum auch eine aus mehreren Lagen bestehende dielektrische Schicht 3, wie sie z.B. aus der US 3,858,977 bekannt ist, mitzulesen.

## Patentansprüche

1. Dekorfolie in Form eines Schichtverbunds (1), der wenigstens eine transparente Basisfolie (2), eine transparente Deckschicht (4), eine zwischen der Basisfolie (2) und der Deckschicht (4) angeordnete, transparente dielektrische Schicht (3) umfasst
**dadurch gekennzeichnet,**
**dass** zwischen der dielektrischen Schicht (3) und der Deckschicht (4) wenigstens in reflektierenden Flächenteilen (24; 24'; 36) eine metallische Schicht (6) angeordnet ist und dass zwischen der dielektrischen Schicht (3) und der Basisfolie (2) eine erste Grenzschicht (13) vorhanden ist, in der sich der Brechungsindex sprunghaft ändert.

2. Dekorfolie nach Anspruch 1,
**dadurch gekennzeichnet,**
**dass** die Basisfolie (2) auf der dem Dielektrikum zugewandten Seite eine zusätzlich aufgetragene, transparente thermoplastische Lackschicht (10) aufweist.

3. Dekorfolie nach Anspruch 2
**dadurch gekennzeichnet,**
**dass** zwischen der Basisfolie (2) und der transparenten thermoplastischen Lackschicht (10) eine 0,5 µm bis 1 µm starke Trennschicht (10') angeordnet ist.

4. Dekorfolie nach Anspruch 2 oder 3
**dadurch gekennzeichnet,**
**dass** wenigstens in den Bereichen der metallischen Schicht (6) zwischen der dielektrischen Schicht (3) und der Lackschicht (10) ein Metallfilm (11) angeordnet ist.

5. Dekorfolie nach Anspruch 1
**dadurch gekennzeichnet,**
**dass** wenigstens in den Bereichen der metallischen Schicht (6) zwischen der dielektrischen Schicht (3) und der Basisfolie (2) ein Metallfilm (11) angeordnet ist.

6. Dekorfolie nach Anspruch 4 oder 5
**dadurch gekennzeichnet,**
**dass** der Metallfilm (11) eine Transparenz von wenigstens 50 % aufweist.

7. Dekorfolie nach einem der Ansprüche 4 bis 6
**dadurch gekennzeichnet,**
**dass** der Metallfilm (11) aus einem Metall der Gruppe Aluminium, Silber, Gold, Chrom, Kupfer und Tellur besteht.

8. Dekorfolie nach einem der Ansprüche 1 bis 7
**dadurch gekennzeichnet,**
**dass** die metallische Schicht (6) aus einem Metall der Gruppe Aluminium, Silber, Gold, Chrom, Kupfer und Tellur besteht.

9. Dekorfolie nach einem der Ansprüche 1 bis 8,
**dadurch gekennzeichnet,**
**dass** die Stärke (s) der dielektrischen Schicht (3) wenigstens in einer Richtung (z) über die Fläche des Schichtverbunds (1) periodisch moduliert ist.

10. Dekorfolie nach einem der Ansprüche 1 bis 9,
**dadurch gekennzeichnet,**
**dass** die Stärke (s) der dielektrischen Schicht (3) eine Funktion des Ortes ist und sich über die Fläche des Schichtverbunds (1) mit einem Gradienten der Stärke (s) von 2 nm/cm bis 250 nm/cm ändert.

11. Dekorfolie nach einem der Ansprüche 1 bis 10,
**dadurch gekennzeichnet,**
**dass** die dielektrische Schicht (3) in Teilbereichen eine Licht (12) beugende, mikroskopisch feine Reliefstruktur eines Flächenmusters (27) an der der Basisfolie (2) zugewandten ersten Grenzfläche (13) und/oder an einer der Deckschicht (4) zugewandten zweiten Grenzfläche (14) aufweist.

12. Dekorfolie nach einem der Ansprüche 1 bis 11,
**dadurch gekennzeichnet,**
**dass** die dielektrischen Schicht (3) aus einem der transparenten Dielektrika der Gruppe MgF₂, ZnO, TiO₂, SiO, SiO₂, ZnS oder einer chalkogeniden Substanz besteht.

13. Dekorfolie nach einem der Ansprüche 1 bis 11,
**dadurch gekennzeichnet,**
**dass** die dielektrischen Schicht (3) aus mehreren Lagen mit verschiedenen transparenten Dielektrika besteht.

14. Dekorfolie nach Anspruch 12 oder 13,
**dadurch gekennzeichnet,**
**dass** die Stärke (s) der dielektrischen Schicht (3) weniger als 300 nm beträgt.

15. Dekorfolie nach einem der Ansprüche 1 bis 14,
**dadurch gekennzeichnet,**
**dass** eine zweite Grenzfäche (14) zwischen der dielektrischen Schicht (3) und der Deckschicht (4) Stellen (7; 25; 26; 26') ohne metallische Schicht (6) aufweist und dass der Schichtverbund (1) an diesen Stellen (7; 25; 26; 26'), die einen Raster, ein Punkt- und/oder Linienmuster in Form von alphanumerischen Zeichen (33) und Emblemen (34) oder Fensterflächen (25) bilden, transparent ist.

16. Dekorfolie nach einem der Ansprüche 1 bis 15
**dadurch gekennzeichnet,**
**dass** das Material der Deckschicht (4) eine Klebefähigkeit aufweist, um den Schichtverbund (1) mittels der Deckschicht (4) mit einem Substrat (5) zu verbinden.

17. Verfahren zum Beschriften von Dekorfolien nach einem der Ansprüche 1 bis 16, **dadurch gekennzeichnet, dass** mittels gepulsten Energiestrahlen (19) im Schichtverbund (1) angeordnete, sich im Kontakt mit der dielektrischen Schicht (3) befindliche Metallschichten (6; 11) ohne eine weitere Beschädigung des Schichtverbunds (1) durch Verdampfen des Metalls im Bereich der Energiestrahlen (19) lokal perforiert werden, wobei im Schichtverbund (1) durch die Perforation der Metallschichten (6, 11) transparente Stellen (7) erzeugt werden.

18. Verfahren nach Anspruch 17, **dadurch gekennzeichnet, dass** die im Kontakt mit der dielektrischen Schicht (3) befindlichen Metallschichten (6; 11) in einem Punkt- oder Linienraster perforiert werden, wobei die Dichte des Punkt- oder Linienrasters aufgrund eines vorgegebenen Musters lokal verändert wird.

19. Verfahren nach Anspruch 17 oder 18, **dadurch gekennzeichnet, dass** die transparenten Stellen (7) bzw. die verbleibenden reflektierenden Flächenteile (36) in Form von alphanumerischen Zeichen (33) erzeugt werden.

20. Verfahren nach einem der Ansprüche 17 bis 19, **dadurch gekennzeichnet, dass** die Metallschichten (6; 11) der Dekorfolie erst nach dem Aufkleben des Schichtverbunds (1) auf eine Indicia (8) tragende Oberfläche (29) eines Ausweises (28) lokal perforiert werden.

21. Verwendung der Dekorfolie nach Anspruch 16
**dadurch gekennzeichnet,**
**dass** zum Versiegeln einer zu schützenden Oberfläche (29) des Substrats (5) die Deckschicht (4) des Schichtverbunds (1) mit dem Substrat (5) verbunden ist und dass das Substrat (5) ein Ausweis (28) ist.

## Claims

1. Décor film in the form of a layer composite (1), which has at least one transparent base film (2), a transparent covering layer (4), and a transparent dielectric layer (3) which is arranged between the base film (2) and the covering layer (4),
**characterized**
**in that** a metallic layer (6) is arranged at least in reflective area parts (24; 24'; 36) between the dielectric layer (3) and the covering layer (4), and in that a first boundary layer (13) in which the refractive index changes suddenly, is provided between the dielectric layer (3) and the base film (2).

2. Décor film according to Claim 1,
**characterized**
**in that** the base film (2) has an additionally applied transparent thermoplastic lacquer layer (10) on the side facing the dielectric.

3. Décor film according to Claim 2,
**characterized**
**in that** a separating layer (10'), with a thickness of 0.5 *µ*m to 1 *µ*m, is arranged between the base film (2) and the transparent thermoplastic lacquer layer (10).

4. Décor film according to Claim 2 or 3,
**characterized**
**in that** a metal film (11) is arranged between the dielectric layer (3) and the lacquer layer (10), at least in the areas of the metallic layer (6).

5. Décor film according to Claim 1,
**characterized**
**in that** a metal film (11) is arranged between the dielectric layer (3) and the base film (2), at least in the areas of the metallic layer (6).

6. Décor film according to Claim 4 or 5,
**characterized**
**in that** the metal film (11) has a transparency of at least 50%.

7. Décor film according to one of Claims 4 to 6,
**characterized**
**in that** the metal film (11) is composed of a metal from the group comprising aluminium, silver, gold, chromium, copper and tellurium.

8. Décor film according to one of Claims 1 to 7,
**characterized**
**in that** the metallic layer (6) is composed of a metal from the group comprising aluminium, silver, gold, chromium, copper and tellurium.

9. Décor film according to one of Claims 1 to 8,
**characterized**
**in that** the thickness (s) of the dielectric layer (3) is modulated periodically over the surface of the layer composite (1), at least in one direction (z).

10. Décor film according to one of Claims 1 to 9,
**characterized**
**in that** the thickness (s) of the dielectric layer (3) is a function of the location, and varies over the area of the layer composite (1) with a gradient of the thickness (s) from 2 nm/cm to 250 nm/cm.

11. Décor film according to one of Claims 1 to 10,
**characterized**
**in that**, in subareas, the dielectric layer (3) has a microscopically fine relief structure, which diffracts light (12), of a surface pattern (27) on the first boundary surface (13) facing the base film (2), and/or on a second boundary surface (14) facing the covering layer (4).

12. Décor film according to one of Claims 1 to 11,
**characterized**
**in that** the dielectric layer (3) is composed of one of the transparent dielectrics from the group comprising MgF₂, ZnO, TiO₂, SiO, SiO₂, ZnS or a chalcogenide substance.

13. Décor film according to one of Claims 1 to 11,
**characterized**
**in that** the dielectric layer (3) comprises a plurality of layers with different transparent dielectrics.

14. Décor film according to Claim 12 or 13,
**characterized**
**in that** the thickness (s) of the dielectric layer (3) is less than 300 nm.

15. Décor film according to one of Claims 1 to 14,
**characterized**
**in that** a second boundary surface (14) has points (7; 25; 26; 26') without any metallic layer (6) between the dielectric layer (3) and the covering layer (4), and in that the layer composite (1) is transparent at these points (7; 25; 26; 26'), which form a grid, a point and/or line pattern in the form of alphanumeric characters (33) and emblems (34) or window areas (25).

16. Décor film according to one of Claims 1 to 15,
**characterized**
**in that** the material of the covering layer (4) has an adhesion capability in order to connect the layer composite (1) to a substrate (5) by means of the covering layer (4).

17. Method for inscription of décor films according to one of Claims 1 to 16,
**characterized**
**in that** metal layers (6; 11) which are arranged in the layer composite (1) and are in contact with the dielectric layer (3) are locally perforated by means of pulsed energy beams (19) without any further damage to the layer composite (1) by vaporization of the metal in the area of the energy beams (19), with transparent points (7) being produced in the layer composite (1) by perforation of the metal layers (6, 11).

18. Method according to Claim 17,
**characterized**
**in that** the metal layers (6; 11) which are in contact with the dielectric layer (3) are perforated in a point or line grid, with the density of the point or line grid being varied locally on the basis of a predetermined pattern.

19. Method according to Claim 17 or 18,
**characterized**
**in that** the transparent points (7) and/or the remaining reflective surface parts (36) are produced in the form of alphanumeric characters (33).

20. Method according to one of Claims 17 to 19,
**characterized**
**in that** the metal layers (6; 11) of the décor film are not locally perforated until the layer composite (1) has been adhesively bonded onto a surface (29), on which there are indications (8) of an identity card (28).

21. Use of the décor film according to Claim 16,
**characterized**
**in that**, in order to seal a surface (29) of the substrate (5) that is to be protected, the covering layer (4) of the layer composite (1) is connected to the substrate (5), and in that the substrate (5) is an identify card (28).

## Revendications

1. Film décor sous la forme d'une liaison de couches (1), lequel comprend au moins un film de base (2), une couche de recouvrement transparente (4), une couche diélectrique transparente agencée entre le film de base (2) et la couche de recouvrement (4), **caractérisé en ce qu'**au moins une couche métallique (6) est agencée dans les parties de surface (24 ; 24' ; 36), entre la couche diélectrique (3) et la couche de recouvrement (4), et qu'une première couche limite (13) est disponible entre la couche diélectrique (3) et le film de base (2), dans laquelle l'index de réfraction se modifie de manière changeante.

2. Film décor selon la revendication 1, **caractérisé en ce que** le film de base (2) comprend une couche de laque transparente thermoplastique (10) supplémentaire, appliquée sur le côté orienté vers le diélectrique.

3. Film décor selon la revendication 2, **caractérisé en ce qu'**une couche de séparation (10') d'une rigidité de 0,5 µm à 1 µm, est agencée entre le film de base (2) et la couche de laque transparente thermoplastique (10).

4. Film décor selon la revendication 2 ou 3, **caractérisé en ce qu'**un film métallique (11) est agencé au moins dans les zones de la couche métallique (6) entre la couche diélectrique (3) et la couche de laque (10).

5. Film décor selon la revendication 1, **caractérisé en ce qu'**un film métallique (11) est agencé au moins dans les zones de la couche métallique (6) entre la couche diélectrique (3) et le film de base (2).

6. Film décor selon la revendication 4 ou 5, **caractérisé en ce que** le film métallique (11) comprend une transparence d'au moins 50 %.

7. Film décor selon l'une quelconque des revendications 4 à 6, **caractérisé en ce que** le film métallique (11) est constitué d'un métal du groupe aluminium, argent, or, chrome, cuivre et tellure.

8. Film décor selon l'une quelconque des revendications 1 à 7, **caractérisé en ce que** la couche métallique (6) est constituée d'un métal du groupe aluminium, argent, or, chrome, cuivre et tellure.

9. Film décor selon l'une quelconque des revendications 1 à 8, **caractérisé en ce que** la rigidité (s) de la couche diélectrique (3) est modulée périodiquement au moins dans une direction (z) sur la surface de la liaison de couches (1).

10. Film décor selon l'une quelconque des revendications 1 à 9, **caractérisé en ce que** la rigidité (s) de la couche diélectrique (3) est une fonction de l'emplacement et se modifie sur la surface de la liaison de couches (1) avec un gradient de rigidité (s) de 2 nm/cm à 250 nm/cm.

11. Film décor selon l'une quelconque des revendications 1 à 10, **caractérisé en ce que** la couche diélectrique (3) comprend une structure de relief d'une forme de surface (27), ayant une finesse microscopique et diffractant la lumière (12) dans des parties de surface, sur la première surface limite (13) orientée vers le film de base (2) et/ou sur la seconde surface limite (14) orientée vers la couche de recouvrement (4).

12. Film décor selon l'une quelconque des revendications 1 à 11, **caractérisé en ce que** la couche diélectrique (3) est constituée d'un diélectrique transparent du groupe MgF2, ZnO, TiO2, SiO, SiO2, ZnS ou d'une substance chalcogénide.

13. Film décor selon l'une quelconque des revendications 1 à 11, **caractérisé en ce que** la couche diélectrique (3) est constituée de plusieurs couches avec un diélectrique transparent différent.

14. Film décor selon les revendications 12 ou 13, **caractérisé en ce que** la rigidité (s) de la couche diélectrique (3) comprend moins de 300 nm.

15. Film décor selon les revendications 1 à 14, **caractérisé en ce qu'**une seconde surface limitée (14) comprend des positions (7; 25 ; 26 ; 26') entre la couche diélectrique (3) et la couche de recouvrement (4) sans couche métallique (6), et que la liaison de couches (1) est transparente au niveau de ces positions (7; 25 ; 26 ; 26'), lesquelles forment une trame, un dessin de points et/ou de lignes sous la forme de signes alphanumériques (33) et de symboles (34) ou de surfaces de fenêtre (25).

16. Film décor selon les revendications 1 à 15, **caractérisé en ce que** le matériel de la couche de recouvrement (4) comprend une adhérence pour relier la liaison de couches (1) et la couche de recouvrement (4) à l'aide d'un support (5).

17. Procédé pour l'inscription de film décor selon l'une quelconque des revendication 1 à 16, **caractérisé en ce que**, à l'aide de faisceaux d'énergie pulsés (19) dans la liaison de couches (1), des couches métalliques (6 ; 11) agencées dans la liaison de couches (1) et se trouvant en contact avec la couche diélectrique (3) sont perforées localement, sans endommager la liaison de couches (1), à l'aide d'une évaporation du métal dans la zone des faisceaux d'énergie (19), des zones transparentes (7) étant produites dans la liaison de couches (1) à l'aide d'une perforation des couches métalliques (6 ; 11).

18. Procédé selon la revendication 17, **caractérisé en ce que** les couches métalliques (6 ; 11) se trouvant en contact avec la couche diélectrique (3) sont perforées selon une trame de points ou de lignes, l'épaisseur de la trame de points ou de lignes étant modifiée localement sur la base d'un modèle prédéterminé.

19. Procédé selon la revendication 17 ou 18, **caractérisé en ce que** les zones transparentes (7), respectivement, les parties de surface reflétant restantes (36), sont produites sous la forme de signes alphanumériques (33).

20. Procédé selon l'une quelconque des revendications 17 à 19, **caractérisé en ce que** les couches métalliques (6 ; 11) du film de recouvrement sont perforées localement uniquement après le collage de la liaison de couches (1) sur une surface (29) portant un indice (8) d'une carte d'identité (28).

21. Utilisation du film décor selon la revendication 16, **caractérisée en ce que** pour le scellement d'une surface devant être protégée (29) du support (5), la couche de recouvrement (4) de la liaison de couches (1) est reliée au support (5) et que le support (5) est une carte d'identité (28).
